Europäisches Patentamt

European Patent Office

Office européen des brevets

(19)

(11) Veröffentlichungsnummer: **0 260 499**
**A2**

(12)
# EUROPÄISCHE PATENTANMELDUNG

(21) Anmeldenummer: 87112538.1

(22) Anmeldetag: 28.08.87

(51) Int. Cl.⁴ **C08G 18/36** , C08G 18/08 , C08G 18/30 , C08G 18/64

(30) Priorität: 06.09.86 DE 3630422

(43) Veröffentlichungstag der Anmeldung:
23.03.88 Patentblatt 88/12

(84) Benannte Vertragsstaaten:
AT BE CH DE ES FR GB IT LI LU NL SE

(71) Anmelder: Henkel Kommanditgesellschaft auf Aktien
Postfach 1100 Henkelstrasse 67
D-4000 Düsseldorf-Holthausen(DE)

(72) Erfinder: Höfer, Rainer, Dr.
Kleverstrasse 31
D-4000 Düsseldorf 30(DE)
Erfinder: Gruber, Bert, Dr.
Albert-Schlangen-Strasse 28
D-5012 Bedburg(DE)
Erfinder: Meffert, Alfred, Dr.
Marie-Curie-Strasse 10
D-4019 Monheim(DE)
Erfinder: Grützmacher, Roland
Heinrich-Heine-Strasse 2
D-5603 Wülfrath(DE)

(54) Verwendung von Fettpolyolen für die Herstellung wässriger Polyurethan-Dispersionen.

(57) Die Erfindung betrifft die Verwendung von Polyolen oder Polyolgemischen, die durch Ringöffnung epoxidierter, aus natürlichen Fetten und Ölen stammender Fettsäureester mit aliphatischen Hydroxyverbindungen der Funktionalität 1 bis 10 herstellbar sind, für die Herstellung wäßriger Polyurethan-Dispersionen.

EP 0 260 499 A2

## Verwendung von Fettpolyolen für die Herstellung wäßriger Polyurethan-Dispersionen.

Die Erfindung betrifft die Verwendung von Fettpolyolen als Polyolkomponente für die Herstellung wäßriger Polyurethan-Dispersionen.

Unter "Fettpolyolen" werden erfindungsgemäß solche Polyole verstanden, die sich aus natürlich nachwachsenden Fett-und Öl-Rohstoffen ableiten und aus diesen über chemische Verfahren herstellbar sind.

Wässrige Polyurethandispersionen und Verfahren zu ihrer Herstellung sind aus dem Stand der Technik seit längerem bekannt. Eine Zusammenstellung der prinzipiellen Herstellungsprozesse sowie ein Vergleich der daraus resultierenden wäßrigen Polyurethan-Dispersionen mit nach dem Lösungs-Polymerisations-Verfahren hergestellten Polyurethanen ist der Veröffentlichung von J. T. Zermani, J. Waterborne Coatings, August 1984, Seite 2 ff, zu entnehmen.

Wässrige Polyurethan-Dispersionen lassen sich z.B. dadurch herstellen, daß man Polyurethane mittels ober flächenaktiver Verbindungen in Wasser dispergiert (sogenannte "Sekundäremulsionen"). Derartige Sekundäremulsionen treten heute hinsichtlich ihrer praktischen Bedeutung hinter solche wäßrigen Polyurethan-Dispersionen zurück, die durch den Einbau hydrophiler Zentren in die makromolekulare Polyurethankette hergestellt werden und durch derartige hydrophile Zentren selbst emulgierend wirken. Die Dispersion derartiger Polyurethane in Wasser führt zu wäßrigen Polyurethan-Dispersionen, die wegen ihrer besonders guten Stabilität und der mit ihnen erhältlichen, vergleichsweise ausgesprochen wasserfesten Polyurethan-Beschichtungen in der Praxis eine große Bedeutung erhalten haben. Die üblicherweise nach dem sogenannten Aceton-Verfahren oder dem sogenannten Prepolymer-Ionomer-Verfahren hergestellten Polyurethan-Ionomer-Dispersionen haben u.a. praktische Anwendung gefunden für die Herstellung von Bindemitteln in der Textil-und Lederindustrie (vgl. "The use of water-borne urethane polymers in fabric coatings"; in: "Coated Fabrics Symposium of the American Association of Textile Chemists and Colorists", Wakefield, MA, 1985), für die Herstellung von Holzlasuren (vgl. A. Ernst in: "Double Liaison - Chimie des Peintures" 39, 58 (1983)), zur Papierbeschichtung (vgl. DE-PSen 24 00 490 und 24 57 972 sowie AT-PS 356 510) sowie zur Herstellung von Basisbeschichtungen eines Mehrschichtüberzuges für Metallic-Automobil-Lackierungen (EP-PS 0 089 497).

Die Herstellung von Polyurethanen nach dem Prepolymer-Ionomer-Verfahren, die zu selbstemulgierenden, hochmolekularen Polyurethanen führt, erfolgt unter Umsetzung geeigneter Polymer-Diol-Komponenten mit geeigneten Diisocyanaten in Gegenwart kurzkettiger Diole oder Diamine, beispielsweise 1.4-Butandiol, Neopentylgly kol, Ethylendiamin, Hydrazin usw., als Kettenverlängerer sowie einer Dihydroxycarbonsäure als hydrophiler Komponente, die die Selbstemulgierbarkeit des resultierenden Polyurethans sicherstellen soll. Als Diisocyanate werden üblicherweise aliphatische oder aromatische Diisocyanate verwendet, wobei deren Auswahl sehr stark von der späteren Verwendungsweise der wäßrigen Polyurethan-Dispersionen abhängt; sollen die resultierenden Polyurethane lichtstabil sein und nicht zu Verfärbungen, beispielsweise nach Gelb, neigen, so sind aliphatische Diisocyanate zu verwenden; kommt es auf Lichtstabilität nicht an, beispielsweise, weil diese Eigenschaft in der Verwendung der resultierenden Polyurethane keine Rolle spielt, so können sowohl aliphatische als auch aromatische Diisocyanate verwendet werden. Die aromatischen Diisocyanate stammen dabei üblicherweise aus der Gruppe Toluylendiisocyanat, 1.4-Phenylendiisocyanat, 1.3-Phenylendiisocyanat, 4.4′-Dibenzyldiisocyanat, Dialkyldiphenylmethandiisocyanat, Tetraalkyldiphenylmethandiisocyanat, 4.4′-Diphenyldimethylmethandiisocyanat, 4.4′-Diphenylmethandiisocyanat und 1.5-Naphthylendiisocyanat. Aliphatische Diisocyanate stammen üblicherweise aus der Gruppe Isophorondiisocyanat, 4.4′-Methylenbis-(cyclohexylisocyanat), Tetramethylen-1.4-diisocyanat, Hexamethylen-1.6-diisocyanat und Cyclohexan-1.4-diisocyanat. Die üblicherweise verwendeten Diisocyanate liegen auch den wäßrigen Polyurethan-Dispersionen zugrunde. zu deren Herstellung erfindungsgemäß Fettpolyole verwendet werden.

Die den wäßrigen Polyurethan-Dispersionen aus dem Stand der Technik zugrunde liegende Polymer-Diol-Komponente geht üblicherweise auf Polyester, Polyether oder Polycarbonate zurück. Die für die Herstellung wäßriger Polyurethan-Dispersionen verwendbaren niedermolekularen Polyolkomponenten aus der genannten Gruppe sind üblicherweise aus petrochemischen Rohstoffen abgeleitet und verteuern mit steigenden Preisen dieser Rohstoffe die Herstellung von wäßrigen Polyurethan-Dispersionen sehr stark.

Eine Aufgabe der vorliegenden Erfindung bestand somit darin, nach neuen Polyolkomponenten für die Herstellung wäßriger Polyurethan-Dispersionen zu suchen, die nicht von petrochemischen, sondern von natürlichen Rohstoffen, insbesondere von natürlichen, nachwachsenden Rohstoffen, abgeleitet sind.

In der DE-OS 16 45 564 wird ein Verfahren zur Herstellung gut trocknender Bindemittel für Lacke offenbart, in dem sogenannte trocknende oder halbtrocknende Öle partiell epoxidiert werden, die Epoxygruppen partiell hydroxyliert werden, die so entstandenen Zwischenprodukte, die ethylenische Doppelbindungen, Epoxygruppen und Hydroxygruppen enthalten, mit Polyisocyanaten urethanisiert werden und die entstandenen Polyurethane zur Verbesserung der Wasseremulgierbarkeit mit Polyoxyalkylenen verethert werden. Nachteil dieses Verfahrens ist es, daß es als ausgesprochen umständlich bezeichnet werden muß und nicht zu selbstemulgierenden Polyurethanen führt, die heutigen Anforderungen an ihre Eignung in technischen Bereichen genügen. So weisen derartige Polyurethane nicht die erforderliche Stabilität in Wasser auf und ergeben üblicherweise nicht die gewünschten, insbesondere hinsichtlich Geschlossenheit, Glanz und Strapazierfähigkeit allen Ansprüchen genügenden Polymerschichten. Eine weitere Aufgabe der vorliegenden Erfindung bestand somit darin, neue Polyolkomponenten zur Verwendung in der Herstellung wäßriger Polyurethandispersionen aufzufinden, welche bewirken, daß die Eigenschaften der mit derartigen Polyurethan-Dispersionen hergestellten Polyurethan-Überzüge allen Anforderungen hinsichtlich mechanischer Strapazierfähigkeit, Härte, Geschlossenheit und Glanz genügen.

Überraschend wurde nun gefunden, daß Fettpolyole, also Polyole, die sich aus natürlich nachwachsenden Rohstoffquellen, wie natürlichen Fetten und Ölen, chemisch herstellen lassen, allen Anforderungen an eine gute Polyolkomponente für die Herstellung wäßriger Polyurethan-Dispersionen genügen.

Die Erfindung betrifft die Verwendung von Polyolen oder Polyolgemischen, die durch Ringöffnung epoxidierter, aus natürlichen Fetten und Ölen stammender Fettsäureester mit aliphatischen Hydroxyverbindungen der Funktionalität 1 bis 10 herstellbar sind, für die Herstellung wäßriger Polyurethan-Dispersionen.

Bei der erfindungsgemäßen Verwendung kommen Polyole oder deren Gemische zum Einsatz, die durch Ringöffnung epoxidierter, aus natürlichen Fetten und Ölen stammender Fettsäureester mit aliphatischen Hydroxyverbindungen herstellbar sind. Unter "epoxidierten, aus natürlichen Fetten und Ölen stammenden Fettsäureestern" werden hier wie im Folgenden sowohl epoxidierte Triglyceride, also epoxidierte Fettsäureglycerinester, wie sie unmittelbar durch Epoxidation natürlicher Fette und Öle zugänglich sind, als auch epoxidierte Fettsäureester anderer Alkohole als Glycerin verstanden, wie sie im großindustriellen Rahmen durch Umesterung von aus natürlichen Fetten und Ölen stammenden Fettsäuretriglyceriden und anschließende Epoxidation auf an sich bekanntem Wege erhältlich sind. Die Epoxidation sowohl der Fettsäureglycerinester als auch der Fettsäureester anderer Alkohole erfolgt dabei nach aus dem Stand der Technik bekannten Verfahren. So lassen sich die epoxidierten Fettsäureglycerinester durch unmittelbare Epoxidation nativer, mehr oder weniger hohe Anteile ungesättigter Gruppen enthaltender Fette und Öle mit Peressigsäure oder Perameisensäure erhalten. In gleicher Weise werden epoxidierte Fettsäureester anderer Alkohole durch Umesterung von aus natürlichen Quellen stammenden Fetten und Ölen mit den jeweiligen Alkoholen und anschließende Epoxidation mit Peressigsäure oder Perameisensäure erhalten. Durch die Epoxidation werden, je nach eingesetzter Menge an organischer Percarbonsäure, die olefinischen Doppelbindungen der Fettsäuregruppierungen ganz oder teilweise in Oxyranringe überführt. Als erfindungsgemäß verwendbare Fettsäureester sind beispielhaft die Ester des Glycerins sowie - nach einer weiteren Ausführungsform - die Ester des Ethylenglykols, Propylenglykols, Trimethylolpropans oder Pentaerythrits zu nennen. Von diesen werden die Ester des Glycerins, also die Triglyceride, bevorzugt verwendet.

In einer vorteilhaften Verwendungsweise kommen zur Herstellung wäßriger Polyurethan-Dispersionen Polyole oder Polyolgemische zum Einsatz, die durch Ringöffnung epoxidierter Fettsäure-Glycerinester oder deren Derivate aus nativen Fetten oder Ölen aus der Gruppe Fischöl, Rindertalg, Tranöl, Baumwollsaatöl, Erdnußöl, Leinöl, Kokosöl, Palmöl, Rizinusöl, Rüböl, Sojabohnenöl und Sonnenblumenöl mit aliphatischen Hydroxyverbindungen der Funktionalität 1 bis 10 herstellbar sind. Von diesen sind die aus nativen Fetten und Ölen aus der Gruppe Fischöl, Tranöl, Baumwollsaatöl, Leinöl, Sojabohnenöl und Sonnenblumenöl stammenden Ringöffnungsprodukte mit besonderem Vorteil einsetzbar. Die entsprechenden Epoxide weisen dabei einen Epoxidsauerstoff-Gehalt im Bereich von 2 bis 10 Gew.-%, bevorzugt im Bereich von 3 bis 8,5 Gew.-% auf.

In besonders vorteilhafter Weise lassen sich Polyole oder Polyolgemische für die Herstellung wäßriger Polyurethandispersionen verwenden, die durch Ringöffnung epoxidierter Fettsäureglycerinester aus Sojabohnenöl mit aliphatischen Hydroxyverbindungen der Funktionalität 1 bis 10 herstellbar sind. Anstelle der Glycerinester können, wie oben beschrieben, auch die durch Umesterung mit Alkoholen herstellbaren sonstigen Ester aus Sojabohnenöl zum Einsatz kommen. Von diesen sind solche epoxidierten Ester besonders bevorzugt, die eine Epoxidzahl im Bereich von 5,8 bis 6,5 aufweisen.

In einer weiteren Ausführungsform werden erfindungsgemäß Polyole zur Herstellung wäßriger Polyurethan-Dispersionen verwendet, die durch Ringöffnung epoxidierter Fettsäureglycerinester aus Sonnenblumenöl herstellbar sind. Auch von solchen Estern sind nicht nur die Glycerinester verwendbar; es können auch Ester anderer Alkohole zum Einsatz kommen. Bevorzugt werden die epoxidierten Ester für die Ringöffnung verwendet, die eine Epoxidzahl im Bereich von 5,6 bis 6,6 aufweisen.

In weiteren Ausführungsformen werden solche Polyole oder Polyolgemische für die Herstellung wäßriger Polyurethan-Dispersionen verwendet, die durch Ringöffnung epoxidierter Fettsäureester aus Leinöl oder Fischöl herstellbar sind, wobei von den aus Leinöl stammenden epoxidierten Fettsäureestern diejenigen mit einer Epoxidzahl im Bereich von 8,2 bis 8,6, von den aus Fischöl stammenden epoxidierten Fettsäureestern diejenigen mit einer Epoxidzahl im Bereich von 6,3 bis 6,7 besonders bevorzugt sind. Von all diesen epoxidierten Fettsäureestern sind sowohl die Fettsäureglycerinester als auch die Fettsäureester anderer ein-oder mehrwertiger Alkohole - wie auch in den oben geschilderten Fällen - verwendbar.

Entsprechend der vorliegenden Erfindung werden für die Herstellung wäßriger Polyurethan-Dispersionen Polyole oder Polyolgemische verwendet, die durch Ringöffnung der oben näher beschriebenen Fettsäureester mit aliphatischen Hydroxyverbindungen der Funktionalität 1 bis 10 herstellbar sind. Bevorzugt kommen dabei aliphatische Hydroxyverbindungen zum Einsatz, die 1 bis 22 C-Atome aufweisen. Dabei werden bei Verwendung von Polyolen oder Polyolgemischen aus Ringöffnungsprodukten epoxidierter Fettsäuren mit aliphatischen Hydroxyverbindungen mit der Funktionalität 1 bis 4 besonders gute Ergebnisse erzielt. Dies schlägt sich beispielsweise in der Stabilität der wäßrigen Polyurethan-Dispersionen wie auch in den vorteilhaften Eigenschaften der aus den Dispersionen erhältlichen Polyurethan-Schichten nieder.

Die aliphatischen Hydroxyverbindungen, mit denen die Oxyranringe der epoxidierten Fettsäureester Ring-ge öffnet werden, stammen dabei bevorzugterweise aus der Gruppe geradkettige und verzweigte monofunktionelle Alkohole mit 1 bis 22 C-Atomen, beispielsweise aus nativen Quellen zugängliche langkettige Fettsäuren, cycloaliphatische Alkohole, mit einem aromatischen Rest substituierte aliphatische Alkohole, geradkettige und verzweigte difunktionelle, trifunktionelle und tetrafunktionelle Alkohole mit 1 bis 6 C-Atomen und - gegebenenfalls aromatisch substituierten - Ethergruppierungen enthaltenden Hydroxyverbindungen. Die Verbindungen aus der genannten Gruppe können ausnahmslos zur Ringöffnung der Oxyranringe der epoxidierten Fettsäureester herangezogen werden. Im Verlauf der Ringöffnungsreaktion entstehen an den Alkylketten der Fettsäureester an je zwei benachbarten C-Atomen der Alkylkette je eine Hydroxygruppierung und eine Alkoxygruppierung, wobei die Alkoxygruppierung durch die Alkoxygruppe des Alkohols bzw. Etheralkohols gebildet wird. Bevorzugterweise kommen zur Ringöffnung der Oxyranringe der epoxidierten Fettsäureester aliphatische Hydroxyverbindungen aus der Gruppe Methanol, Ethanol, Propanol, n-Butanol, n-Hexanol, 2-Ethylhexanol, Cyclohexanol, Benzylalkohol, Ethylenglykol, Propylenglykol, 1.3-Propandiol, Butandiol, Hexandiol, Neopentylglykol, Trimethylolpropan, Glycerin, Trimethylolethan und Pentaerythrit in Frage. Anstelle derartiger aliphatischer Hydroxyverbindungen können auch g  henenfalls aromatisch substituierte, Ethergruppierungen enthaltende Hydroxyverbindungen zum Einsatz kommen, wie beispielsweise Phenoxyethanol, Phenoxyethanolpolyglykolether, Phenoxypropanol, Phenoxypropanolpolyglykolether, Alkylphenolpolyglykolether mit 1 bis 4 C-Atomen im Alkylrest, Alkylglykole oder oligomere Glykole sowie oligomere Glycerine oder oligomere Trimethylolpropane. Besonders bevorzugt kommen Polyole oder Polyolgemische zum Einsatz, die durch Ringöffnung der oben genannten epoxidierten Fettsäureester mit Methanol herstellbar sind.

Im wesentlichen richtet sich die Funktionalität der durch die Ringöffnungsreaktion der epoxidierten Fettsäureester mit den aliphatischen Hydroxyverbindungen erhältlichen Polyole bzw. Polyolgemische nach dem Umsetzungsverhältnis Fettsäureester : Hydroxyverbindung, wobei hier auch die Zahl der Epoxygruppierungen im Fettsäureester eine Rolle spielt. Dieses Umsetzungsverhältnis liegt üblicherweise im Bereich von 1 : 1 bis 1 : 10, in dem Polyole herstellbar sind, die bei ihrer Verwendung zur Herstellung von wäßrigen Polyurethan-Dispersionen zu besonders stabilen Dispersionen führen bzw. Polyurethanschichten mit vorteilhaften, erwünschten Eigenschaften liefern.

Die erfindungsgemäß verwendbaren Polyole bzw. Polyolgemische, die durch Ringöffnung der epoxidierten Fettsäureester mit aliphatischen Hydroxyverbindungen herstellbar sind, werden üblicherweise als alleinige Polyolkomponente zur Umsetzung mit den üblicherweise verwendeten Diisocyanaten unter Bildung von Polyurethanen herangezogen, wobei die einleitend erwähnten Kettenverlängerer (kurzkettige Diole oder Diamine, wie beispielsweise Glykole wie Ethylenglykol, Diethylenglykol, Triethylenglykol oder Tetraethylenglykol, Butandiol, 1.2-Propandiol, 1.3-Propandiol, Neopentylglykol, Dioxyethoxyhydrochinon, oder Diamine wie Ethylendiamin, Hexamethylendiamin, Benzidin und Diaminodiphenylmethan sowie Hydrazin oder Aminoalkohole, und auch die als hydrophile Komponente zur Sicherstellung der Selbstemulgierbarkeit verwendete Dihydroxycarbonsäure, beispielsweise Dimethylolpropionsäure) als Polyolkomponente nicht gerechnet werden. Im erfindungsgemäßen Sinne ist es also besonders bevorzugt, zur Verwendung der wäßrigen Polyurethan-Dispersionen nur die Polyole oder Polyolgemische zum Einsatz zu bringen, die durch Ringöffnung der oben näher beschriebenen epoxidierten Fettsäureester mit den oben ebenfalls näher beschriebenen aliphatischen Hydroxyverbindungen herstellbar sind.

Es ist jedoch auch möglich und wird ebenfalls vom Rahmen der vorliegenden Erfindung umfaßt, zur Herstellung wäßriger Polyurethan-Dispersionen neben den erfindungsgemäß verwendbaren Polyolen oder Polyolgemischen, die durch Ringöffnung der epoxidierten Fettsäureester mit aliphatischen Hydroxyverbindungen herstellbar sind, noch andere, üblicherweise für die Herstellung von wäßrigen Polyurethan-Dispersionen verwendbare Polyole oder Polyolgemische einzusetzen. Wie oben näher ausgeführt, sind unter solchen anderen Polyolen in erster Linie Polyester, Polyether oder Polycarbonate zu verstehen. Diese herkömmlichen und aus dem Stand der Technik in weitem Umfang bekannten Polyolkomponenten können zusammen mit den aus epoxidierten Fettsäureestern und Hydroxyverbindungen herstellbaren Polyolen oder Polyolgemischen gemäß der Erfindung ebenfalls verwendet werden.

Erfindungsgemäß ist es möglich, die Ringöffnungsprodukte aus epoxidiertem Fettsäureester und aliphatischer Hydroxyverbindung vor ihrer Verwendung zur Herstellung wäßriger Polyurethan-Dispersionen einer thermischen Zwischenbehandlung zu unterziehen. Diese thermische Zwischenbehandlung wird in der Praxis bei Temperaturen im Bereich von 30 bis 200°C durchgeführt. Dabei kann an die Reaktionsmischung auch ein verminderter Druck angelegt werden. Im Rahmen der thermischen Zwischenbehandlung kann durch die Reaktionsmischung bzw. das Reaktionsprodukt auch heißer Wasserdampf, Heißluft oder Stickstoffgas durchgeleitet werden. Diese sogenannte "Dämpfung" verbessert die Eigenschaften des Polyols bzw. der Polyolmischung weiter.

Die Erfindung wird durch die nachfolgenden Beispiele näher erläutert.

Beispiele 1 bis 4

Herstellung der Polyolkomponenten.

Durch Ringöffnungsreaktion epoxidierter (Beispiele 1, 2 und 4) bzw. teilepoxidierter (Beispiel 3) Fettsäureester aus Sojabohnenöl mit den in der nachfolgenden Tabelle 1 angegeben Alkoholen wurden Polyolkomponenten bzw. Polyolgemische mit den in der nachfolgenden Tabelle 1 angegebenen Eigenschaften hergestellt.

## Tabelle 1

### Erfindungsgemäß verwendete Polyolkomponenten

| Bsp. | Fettsäureester-Quelle | Hydroxyverb. | Thermobeh.[1] | OHZ | Visk. (mPa.s) | VZ | JZ |
|------|----------------------|--------------|---------------|-----|---------------|-----|------|
| 1 | Sojabohnenöl | Methanol | + | 140 | 7300 | 173 | 36 |
| 2 | " | " | + | 209 | 760 | 162 | 14 |
| 3 | " | Ethylenglykol | − | 122 | 2500 | 173 | 73,6 |
| 4 | " | Methanol | −[2] | 240 | 640 | 161,1 | 19,6 |

Anmerkungen:

[1] Thermobehandlung (+) ≙ ja; (-) ≙ nein

[2] Ringöffnungskatalysator blieb nach Neutralisation im Produkt

Beispiele 5 bis 7

Die Polyolkomponenten der Beispiele 1 bis 3 (vgl. Tabelle 1) und die weiteren, für die Herstellung von wäßrigen Polyurethan-Dispersionen erforderlichen Komponenten (I: Diisocyanat: Isophorondiisocyanat; II: hydrophile Komponente zur Sicherstellung der Selbstemulgierbarkeit: Dimethylolpropionsäure; III: N-Methylpyrrolidon) wurden in den in der nachfolgenden Tabelle 2 angegebenen Mengenverhältnissen (Gew.-%, bezogen auf das Gesamtgewicht aller Komponenten der wäßrigen Polyurethan-Dispersion) unter inerter Atmosphäre ($N_2$) bei 10 bis 80°C zusammengerührt und miteinander umgesetzt (Urethanisierung).

Nach Abschluß der Urethanisierungsreaktion wurde zur Neutralisierung der durch den Einbau der Komponente II im Polyurethan enthaltenen sauren Carboxylgruppen N-Methylmorpholin (Komponente IV) zugesetzt. Zum Zwecke der Kettenverlängerung und der Dispergierung des neutralisierten Polyurethan-Polymerisats in Wasser wurde das erhaltene Polyurethan mit deionisiertem Wasser (Komponente V) gemischt und so lange gerührt, bis die Blasenbildung, verursacht durch die Kettenverlängerungsreaktion, in Wasser aufhörte (1 bis 4 h).

## Tabelle 2

### Herstellung wäßriger Polyurethan-Dispersionen
### (Mengenanteile der Komponenten in Gew.-%)

| Komponente | Bsp. 5 | Bsp. 6 | Bsp. 7 |
|---|---|---|---|
| Polyol aus Bsp. 1 | 14,85 | | |
| Polyol aus Bsp. 2 | | 12,91 | |
| Polyol aus Bsp. 3 | | | 18,00 |
| I[1] | 15,98 | 21,34 | 17,40 |
| II[1] | 2,97 | 2,58 | 3,60 |
| III[1] | 4,42 | 2,97 | 4,14 |
| IV[1] | 2,39 | 2,07 | 2,90 |
| V[1] | 59,39 | 58,11 | 53,97 |

Anmerkung:
[1] = Bedeutung der Komponenten I bis V siehe voran-stehender Text.

Die so hergestellten Polyurethan-Dispersionen sind sehr feinteilig und trotzdem dünnflüssig. Die Dispersionen trocknen zu geschlossenen, glänzenden, klaren und sehr harten Filmen auf.

BAD ORIGINAL

Beispiele 8 und 9

In zwei weiteren Versuchsansätzen wurden das Polyol des Beispiels 4 und Glycerinmonostearat (Komponente VI; OHZ: 200 bis 250; im Handel erhältlich unter dem Namen Disponil GMS 55) in den in der nachfolgenden Tabelle 3 angegebenen Mengen in einem Reaktionsgefäß vorgelegt. Unter Rühren bei Raumtemperatur folgte die Zugabe von Dibutylzinndiacetat (Komponenten VII) und Aceton (Komponente VIII) in den in Tabelle 3 angegebenen Mengen. Danach wurde im Verlaufe von 10 bis 15 min als Diisocyanat Toluylendiisocyanat (Komponente IX) in den in Tabelle 3 angegebenen Mengen zugesetzt. Die Reaktionsmischung wurde bis zu der Temperatur aufgeheizt, bei der das Lösungsmittel unter Rückfluß siedete. Die Phase der Prepolymerbildung (Urethanisierung) war nach ungefähr 0,5 bis 1 h Reaktionszeit abgeschlossen.

Danach wurde bei Siedetemperatur des Acetons das Triethylaminsalz der Dimethylolpropionsäure in Aceton (Komponente X) in den in Tabelle 3 angegebenen Mengen in kleinen Chargen zugesetzt. Nach einer weiteren Stunde erfolgte die Zugabe von deionisiertem Wasser in den in Tabelle 3 angegebenen Mengen (Komponente V).

Das Aceton wurde unter Anlegen von Vakuum abdestilliert, und man erhielt eine 15 bis 20 %ige wäßrige Polyurethan-Dispersion.

## Tabelle 3

### Herstellung wäßriger Polyurethan-Dispersionen
### (Mengenanteil der Komponenten in Gew.-%)

| Komponenten | Bsp. 8 | Bsp. 9 |
|---|---|---|
| Polyol aus Bsp. 4 | 0,475 | 1,19 |
| VI[1] | 4,28 | 3,57 |
| VII[1] | 0,012 | – |
| VIII[1] | 10,49 | 10,49 |
| IX[1] | 4,75 | 4,75 |
| X[1] | 13,61 | 13,61 |
| V[1] | 66,38 | 66,39 |

**Ansprüche**

1. Verwendung von Polyolen oder Polyolgemischen, die durch Ringöffnung epoxidierter, aus natürlichen Fetten und Ölen stammender Fettsäureester mit aliphatischen Hydroxyverbindungen der Funktionalität 1 bis 10 herstellbar sind, für die Herstellung wäßriger Polyurethan-Dispersionen.

2. Verwendung nach Anspruch 1, dadurch gekennzeichnet, daß Polyole oder Polyolgemische zum Einsatz kommen, die durch Ringöffnung epoxidierter, aus natürlichen Fetten und Ölen stammender Fettsäureglycerinester mit aliphatischen Hydroxyverbindungen der Funktionalität 1 bis 10 herstellbar sind.

3. Verwendung nach Ansprüchen 1 und 2, dadurch gekennzeichnet, daß Polyole oder Polyolgemische zum Einsatz kommen, die durch Ringöffnung epoxidierter Fettsäureglycerinester oder deren Derivate aus natürlichen Fetten und Ölen aus der Gruppe Fischöl, Rindertalg, Schmalz, Tranöl, Baumwollsaatöl, Ernußöl,Leinöl, Kokosöl, Palmöl, Rizinusöl, Rüböl, Sojabohnenöl und Sonnenblumenöl mit aliphatischen Hydroxyverbindungen der Funktionalität 1 bis 10 herstellbar sind.

4. Verwendung nach Ansprüchen 1 bis 3, dadurch gekennzeichnet, daß Polyole oder Polyolgemische zum Einsatz kommen, die durch Ringöffnung epoxidierter Fettsäureester oder deren Derivate aus natürlichen Fetten und Ölen aus der Gruppe Fischöl, Rindertalg, Schmalz, Tranöl, Baumwollsaatöl, Ernußöl, Leinöl, Kokosöl, Palmöl, Rizinusöl, Rüböl, Sojabohnenöl und Sonnen blumenöl mit einem Gehalt an Epoxidsauerstoff im Bereich von 2 bis 10, bevorzugt von 3 bis 8,5 Gew.-% mit aliphatischen Hydroxyverbindungen der Funktionalität 1 bis 10 herstellbar sind.

5. Verwendung nach Ansprüchen 1 bis 4, dadurch gekennzeichnet, daß Polyole oder Polyolgemische zum Einsatz kommen, die durch Ringöffnung epoxidierter Fettsäureester oder deren Derivate aus natürlichen Fetten und Ölen aus der Gruppe Fischöl, Tranöl, Baumwollsaatöl, Leinöl, Sojabohnenöl und Sonnenblumenöl mit aliphatischen Hydroxyverbindungen der Funktionalität 1 bis 10 herstellbar sind.

6. Verwendung nach Ansprüchen 1 bis 5, dadurch gekennzeichnet, daß Polyole oder Polyolgemische zum Einsatz kommen, die durch Ringöffnung epoxidierter Fettsäureester oder deren Derivate aus Sojabohnenöl mit aliphatischen Hydroxyverbindungen der Funktionalität 1 bis 10 herstellbar sind.

7. Verwendung nach Anspruch 6, dadurch gekennzeichnet, daß Polyole oder Polyolgemische zum Einsatz kommen, die durch Ringöffnung epoxidierter Fettsäureester oder deren Derivate aus Sojabohnenöl mit einer Epoxidzahl von 5,8 bis 6,5 mit aliphatischen Hydroxyverbindungen der Funktionalität 1 bis 10 herstellbar sind.

8. Verwendung nach Ansprüchen 1 bis 5, dadurch gekennzeichnet, daß Polyole oder Polyolgemische zum Einsatz kommen, die durch Ringöffnung epoxidierter Fettsäureester oder deren Derivate aus Sonnenblumenöl mit aliphatischen Hydroxyverbindungen der Funktionalität 1 bis 10 herstellbar sind.

9. Verwendung nach Anspruch 8, dadurch gekennzeichnet, daß Polyole doer Polyolgemische zum Einsatz kommen, die durch Ringöffnung epoxidierter Fettsäureester oder deren Derivate aus Sonnenblumenöl mit einer Epoxidzahl von 5,6 bis 6,6 mit aliphatischen Hydroxyverbindungen der Funktionalität 1 bis 10 herstellbar sind.

10. Verwendung nach Ansprüchen 1 bis 5, dadurch gekennzeichnet, daß Polyole oder Polyolgemische zum Einsatz kommen, die durch Ringöffnung epoxidierter Fettsäureester oder deren Derivate aus Leinöl mit aliphatischen Hydroxyverbindungen der Funktionalität 1 bis 10 herstellbar sind.

11. Verwendung nach Anspruch 10, dadurch gekennzeichnet, daß Polyole oder Polyolgemische zum Einsatz kommen, die durch Ringöffnung epoxidierter Fettsäureester oder deren Derivate aus Leinöl mit einer Epoxidzahl von 8,2 bis 8,6 mit aliphatischen Hydroxyverbindungen der Funktionalität 1 bis 10 herstellbar sind.

12. Verwendung nach Ansprüchen 1 bis 5, dadurch gekennzeichnet, daß Polyole oder Polyolgemische zum Einsatz kommen, die durch Ringöffnung epoxidierter Fettsäureester oder deren Derivate aus Fischöl mit aliphatischen Hydroxyverbindungen der Funktionalität 1 bis 10 herstellbar sind.

13. Verwendung nach Anspruch 12, dadurch gekennzeichnet, daß Polyole oder Polyolgemische zum Einsatz kommen, die durch Ringöffnung epoxidierter Fettsäureester oder deren Derivate aus Fischöl mit einer Epoxidzahl von 6,3 bis 6,7 mit aliphatischen Hydroxyverbindungen der Funktionalität 1 bis 10 herstellbar sind.

14. Verwendung nach Ansprüchen 1 bis 13, dadurch gekennzeichnet, daß Polyole oder Polyolgemische zum Einsatz kommen, die durch Ringöffnung der epoxidierten Fettsäureester mit aliphatischen Hydroxyverbindungen mit der Funktionalität 1 bis 10 sowie 1 bis 22 C-Atomen im aliphatischen Rest herstellbar sind.

15. Verwendung nach Anspruch 14, dadurch gekennzeichnet, daß Polyole oder Polyolgemische zum Einsatz kommen, die durch Ringöffnung der epoxidierten Fettsäureester mit aliphatischen Hydroxyverbindungen mit der Funktionalität 1 bis 4 und 1 bis 22 C-Atomen im aliphatischen Rest herstellbar sind.

16. Verwendung nach Ansprüchen 1 bis 15, dadurch gekennzeichnet, daß Polyole oder Polyolgemische zum Einsatz kommen, die durch Ringöffnung der epoxidierten Fettsäureester mit aliphatischen Hydroxyverbindungen aus der Gruppe geradkettige und verzweigte monofunktionelle Alkohole mit 1 bis 22 C-Atomen, cycloaliphatische Alkohole, mit einem aromatischen Rest substituierter aliphatische Alkohole, geradkettige und verzweigte difunktionelle, trifunktionelle und tetrafunktionelle Alkohole mit 1 bis 6 C-Atomen und - gegebenenfalls - aromatisch substituierte - Ethergruppierungen enthaltende Hydroxyverbindungen herstellbar sind.

17. Verwendung nach Anspruch 16, dadurch gekennzeichnet, daß Polyole oder Polyolgemische zum Einsatz kommen, die durch Ringöffnung der epoxidierten Fettsäureester mit aliphatischen Hydroxyverbindungen aus der Gruppe Methanol, Ethanol, n-Propanol, i-Propanol, n-Butanol, n-Hexanol, 2-Ethylhexanol, Cyclohexanol, Benzylalkohol, Ethylenglykol, Propylenglykol, 1.3-Pro pandiol, Butandiol, Hexandiol, Neopentylglykol, Trimethylolpropan, Glycerin, Trimethylolethan und Pentaerythrit herstellbar sind.

18. Verwendung nach Anspruch 16, dadurch gekennzeichnet, daß Polyole oder Polyolgemische zum Einsatz kommen, die durch Ringöffnung der epoxidierten Fettsäureester mit aliphatischen Hydroxyverbindungen aus der Gruppe Phenoxyethanol, Phenoxyethanolpolyglykolether, Phenoxypropanol, Phenoxypropanolpolyglykolether, Alkylphenolpolyglykolether, Alkylglykole, oligomere Glykole, oligomere Glycerine und oligomere Trimethylolpropane herstellbar sind.

19. Verwendung nach Ansprüchen 1 bis 17, dadurch gekennzeichnet, daß Polyole oder Polyolgemische zum Einsatz kommen, die durch Ringöffnung der epoxidierten Fettsäureester mit Methanol herstellbar sind.

20. Verwendung nach Ansprüchen 1 bis 19, dadurch gekennzeichnet, daß Polyole oder Polyolgemische zum Einsatz kommen, die durch Ringöffnung der epoxidierten Fettsäureester mit den aliphatischen Hydroxyverbindungen bei einem Umsetzungsverhältnis epoxidierter Fettsäureester : aliphatische Hydroxyverbindung im Bereich von 1 : 1 bis 1 : 10 herstellbar sind.